# EUROPEAN PATENT APPLICATION

(11) **EP 2 680 651 A1**
(43) Date of publication of application: **01.01.2014**
(21) Application number: 12767268.1
(22) Date of filing: 01.04.2012
(51) Int. Cl.: H04W 72/04

(54) **METHOD, BASE STATION DEVICE, TERMINAL DEVICE, AND COMMUNICATION SYSTEM FOR CHANNEL RESOURCE ALLOCATION**

(30) Priority: 02.04.2011 CN 201110083708
(71) Applicant: Huawei Technologies Co., Ltd., Shenzhen, Guangdong 518129 (CN)
(72) Inventor: YAN, Kun, Shenzhen Guangdong 518129 (CN); GAO, Yongqiang, Shenzhen Guangdong 518129 (CN)
(74) Representative: Pfenning, Meinig & Partner GbR
(86) International application number: PCT/CN2012/073476
(87) International publication number: WO 2012/136130

(57) **Abstract**

Embodiments of the present invention provide a method for allocating channel resource, a base station device, a terminal device, and a communication system. The method includes: sending a cell broadcast message to a terminal device, where the cell broadcast message includes description information of a first parameter configuration and description information of a second parameter configuration that correspond to common enhanced dedicated channel resources, where the first parameter configuration is specific to a first transmission time interval (TTI) and the second parameter configuration is specific to a second TTI which is different from the first TTI; receiving indication information sent from the terminal device, where the indication information indicates that the terminal device selects the first TTI or the second TTI as a TTI for use; and allocating a common enhanced dedicated channel resource to the terminal device according to the indication information. In the embodiments of the present invention, multiple TTIs are configured for a cell and the parameter configuration information of the multiple TTIs is broadcast to the terminal device, so that the terminal device can select a proper TTI from the multiple TTIs and a network side can allocate a channel resource according to the selected TTI, thereby increasing the efficiency in allocating and utilizing system resources.

## Description

This application claims priority to Chinese Patent Application No. 201110083708.4, filed with the Chinese Patent Office on April 2, 2011 and entitled "METHOD FOR ALLOCATING CHANNEL RESOURCE, BASE STATION DEVICE, TERMINAL DEVICE, AND COMMUNICATION SYSTEM", which is incorporated herein by reference in its entirety.

### TECHNICAL FIELD

Embodiments of the present invention relate to the field of wireless communications, and in particular, to a method for allocating channel resource, a base station device, a terminal device, and a communication system.

### BACKGROUND

In 3GPP (The 3rd Generation Partnership Project, The 3rd Generation Partnership Project) UMTS (Universal Mobile Telecommunications System, Universal Mobile Telecommunications System) R8 version, for a UE (User Equipment, user equipment) in idle (idle) mode or a CELL_FACH (CELL Forward Access Channel, cell forward access channel) state, in order to reduce an uplink transmission delay and increase an uplink transmission rate, a new feature known as an enhanced RACH (random access channel, Random Access Channel) is adopted. The enhanced RACH enhances random access in R99 version. The enhanced random access adopts an E-DCH (Enhanced Dedicated Channel, enhanced dedicated channel) to substitute for an RACH to implement uplink transmission. An enhanced CELL_FACH procedure roughly includes a preamble access and resource allocation stage, a collision resolution stage, an E-DCH data transmission stage, and a resource release stage.

Resources allocated at the resource allocation stage refer to Common-EDCH (Common Enhanced-Dedicated Channel, common enhanced-dedicated channel) resources, which are broadcast in system information of a cell. A UE may obtain Common-EDCH resource information by reading the system information broadcast by the cell. According to the existing protocol, there are altogether 32 sets of Common-EDCH resources, including code information such as an F-DPCH (Fractional Dedicated Physical Channel, fractional dedicated physical channel), an E-RGCH (E-DCH absolute grant channel, E-DCH absolute grant channel), an E-HICH (E-DCH HARQ Acknowledgement Indicator Channel, E-DCH hybrid automatic repeat request acknowledgement indicator channel), and an uplink DPCH (Dedicated Physical Channel, dedicated physical channel). A Node B notifies, through an AICH (Acquisition Indicator Channel, acquisition indicator channel) at the resource allocation stage, the UE of using a resource index. After receiving the resource index, the UE uses the corresponding set of resources to transmit uplink data.

As for the enhanced RACH feature, only one uplink TTI (Transmission Time Interval, transmission time interval) length can be configured for each cell and the UE uses only one TTI length, which may be a 2 ms TTI or 10 ms TTI, in uplink data transmission. Therefore, the aforesaid 32 sets of resources are all configured specifically for the occasion where the UE uses one TTI length.

However, the configuration is not flexible enough. If the TTI of a cell does not match the TTI required by the UE, the utilization efficiency of system resources will be reduced.

### SUMMARY

Embodiments of the present invention provide a method for allocating channel resource, a base station device, a terminal device, and a communication system, which can increase the utilization efficiency of system resources.

In one aspect, a method for allocating channel resource is provided, including: sending a cell broadcast message to a terminal device, where the cell broadcast message includes description information of a first parameter configuration and description information of a second parameter configuration that correspond to common enhanced dedicated channel resources, where the first parameter configuration is specific to a first transmission time interval (TTI) and the second parameter configuration is specific to a second TTI which is different from the first TTI; receiving indication information sent from the terminal device, where the indication information indicates that the terminal device selects the first TTI or the second TTI as a TTI for use; and allocating a common enhanced dedicated channel resource to the terminal device according to the indication information.

In another aspect, a method for allocating channel resource is provided, including: receiving a cell broadcast message from a network side, where the cell broadcast message includes description information of a first parameter configuration and description information of a second parameter configuration that correspond to common enhanced dedicated channel resources, where the first parameter configuration is specific to a first transmission time interval (TTI) and the second parameter configuration is specific to a second TTI which is different from the first TTI; selecting the first TTI or the second TTI as a TTI for use and generating indication information of the selected TTI; and sending the indication information to the network side, so that the network side allocates a common enhanced dedicated channel resource according to the indication information.

In another aspect, a base station device is provided, including: a broadcasting unit, configured to send a cell broadcast message to a terminal device, where the cell broadcast message includes description information of a first parameter configuration and description information of a second parameter configuration that correspond to common enhanced dedicated channel resources, where the first parameter configuration is specific to a first transmission time interval (TTI) and the second parameter configuration is specific to a second TTI which is different from the first TTI; a receiving unit, configured to receive indication information sent from the terminal device, where the indication information indicates that the terminal device selects the first TTI or the second TTI as a TTI for use; and an allocating unit, configured to allocate a common enhanced dedicated channel resource to the terminal device according to the indication information.

In another aspect, a terminal device is provided, including: a receiving unit, configured to receive a cell broadcast message from a network side, where the cell broadcast message includes description information of a first parameter configuration and description information of a second parameter configuration that correspond to common enhanced dedicated channel resources, where the first parameter configuration is specific to a first transmission time interval (TTI) and the second parameter configuration is specific to a second TTI which is different from the first TTI; a selecting unit, configured to select the first TTI or the second TTI as a TTI for use and generate indication information of the selected TTI; and a sending unit, configured to send the indication information to the network side, so that the network side allocates a common enhanced dedicated channel resource according to the indication information.

In another aspect, a method for allocating channel resource is provided, including: sending a cell broadcast message to a terminal device, where the cell broadcast message includes description information of a first parameter configuration and description information of a second parameter configuration that correspond to common enhanced dedicated channel resources, where the first parameter configuration is specific to a first transmission time interval (TTI) and the second parameter configuration is specific to a second TTI which is different from the first TTI; selecting the first TTI or the second TTI as a TTI for use; notifying the terminal device of the selected TTI; and allocating a common enhanced dedicated channel resource to the terminal device according to the selected TTI.

In another aspect, a method for allocating channel resource is provided, including: receiving a cell broadcast message from a network side, where the cell broadcast message includes description information of a first parameter configuration and description information of a second parameter configuration that correspond to common enhanced dedicated channel resources, where the first parameter configuration is specific to a first transmission time interval (TTI) and the second parameter configuration is specific to a second TTI which is different from the first TTI; receiving indication information from the network side, where the indication information indicates that the network side device selects the first TTI or the second TTI as a TTI for use; and receiving a common enhanced dedicated channel resource that is allocated by the network side according to the selected TTI.

In another aspect, a base station device is provided, including: a broadcasting unit, configured to send a cell broadcast message to a terminal device, where the cell broadcast message includes description information of a first parameter configuration and description information of a second parameter configuration that correspond to common enhanced dedicated channel resources, where the first parameter configuration is specific to a first transmission time interval (TTI) and the second parameter configuration is specific to a second TTI which is different from the first TTI; a selecting unit, configured to select the first TTI or the second TTI as a TTI for use; a notifying unit, configured to notify the terminal device of the selected TTI; and an allocating unit, configured to allocate a common enhanced dedicated channel resource to the terminal device according to the selected TTI.

In another aspect, a terminal device is provided, including: a receiving unit, configured to receive a cell broadcast message from a network side, where the cell broadcast message includes description information of a first parameter configuration and description information of a second parameter configuration that correspond to common enhanced dedicated channel resources, where the first parameter configuration is specific to a first transmission time interval (TTI) and the second parameter configuration is specific to a second TTI which is different from the first TTI; where, the receiving unit is further configured to receive indication information from the network side, where the indication information indicates that the network side device selects the first TTI or the second TTI as a TTI for use; and the receiving unit is further configured to receive a common enhanced dedicated channel resource that is allocated by the network side according to the selected TTI.

In another aspect, a communication system is provided, including the above base station device or the above terminal device.

In the embodiments of the present invention, multiple TTIs are configured for a cell and the parameter configuration information of the multiple TTIs is broadcast to the terminal device, so that the terminal device can select a proper TTI from the multiple TTIs and the network side can allocate a channel resource according to the selected TTI, thereby increasing the efficiency in allocating and utilizing system resources.

### BRIEF DESCRIPTION OF DRAWINGS

To illustrate the technical solutions in the embodiments of the present invention more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a schematic flowchart of a method for allocating channel resource according to an embodiment of the present invention;
FIG. 2 is a schematic flowchart of a method for allocating channel resource according to an embodiment of the present invention;
FIG. 3A and FIG. 3B are schematic flowcharts of processes of channel resource allocation according to an embodiment of the present invention;
FIG. 4 is a schematic flowchart of a process of channel resource allocation according to an embodiment of the present invention;
FIG. 5 is a schematic block diagram of a base station device according to an embodiment of the present invention;
FIG. 6 is a schematic block diagram of a base station device according to an embodiment of the present invention;
FIG. 7 is a schematic block diagram of a terminal device according to an embodiment of the present invention;
FIG. 8 is a schematic flowchart of a method for allocating channel resource according to an embodiment of the present invention;
FIG. 9 illustrates a method for allocating channel resource according to an embodiment of the present invention;
FIG. 10 is a schematic block diagram of a base station device according to an embodiment of the present invention;
FIG. 11 is a schematic block diagram of a terminal device according to an embodiment of the present invention;
FIG. 12 is a schematic block diagram of a communication system according to an embodiment of the present invention; and
FIG. 13 is a schematic block diagram of a communication system according to another embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

The technical solutions of the present invention may be applied to various communication systems, such as GSM, code division multiple access (CDMA, Code Division Multiple Access), wideband code division multiple access (WCDMA, Wideband Code Division Multiple Access Wireless), general packet radio service (GPRS, General Packet Radio Service), and long term evolution (LTE, Long Term Evolution).

A mobile terminal (Mobile Terminal), or referred to as a mobile user (UE, User Equipment) or a mobile user equipment or the like, may communicate with one or more core networks via a radio access network (RAN, Radio Access Network). The mobile terminal may be a mobile terminal such as a mobile phone (or referred as cellular phone) or a computer equipped with a mobile terminal, such as a portable, pocket-sized, handheld, computer-embedded, or vehicle-mounted mobile apparatus. The mobile terminals exchange speeches and/or data with the radio access network.

A base station may be a base station in GSM or CDMA (BTS, Base Transceiver Station), or a base station in WCDMA (NodeB), or an evolved base station in LTE (eNB or e-NodeB, evolutional Node B), which is not limited by the present invention. For ease of description, the following embodiments take the Node B as an example for description.

The UE or the network side cannot adjust the length of the TTI dynamically according to the requirement of the UE. The UE can use only the TTI configured by the network side. For example, a cell supports only a 2 ms TTI length but the UE is located at the cell edge, where switching to a 10 ms TTI length can achieve better coverage and transmission reliability. Or, the cell supports only a 10 ms TTI length but the UE is located in the cell center, where more power is available and switching to a 2 ms TTI length will effectively increase the uplink transmission rate. In this case, the TTI of the cell does not match the TTI required by the UE, which reduces the utilization efficiency of system resources.

The embodiments of the present invention take into account the possibility of configuring two TTI lengths in each cell. That is, in one cell, a UE supporting an enhanced RACH can select one of the two TTI lengths dynamically to transmit uplink data.

Although the UE is used to represent a terminal device and the Node B is used to represent a base station device hereinafter, the embodiments of the present invention are not limited to the specific systems represented by these terms. The embodiments of the present invention are applicable to any system that can use multiple TTI lengths in one cell.

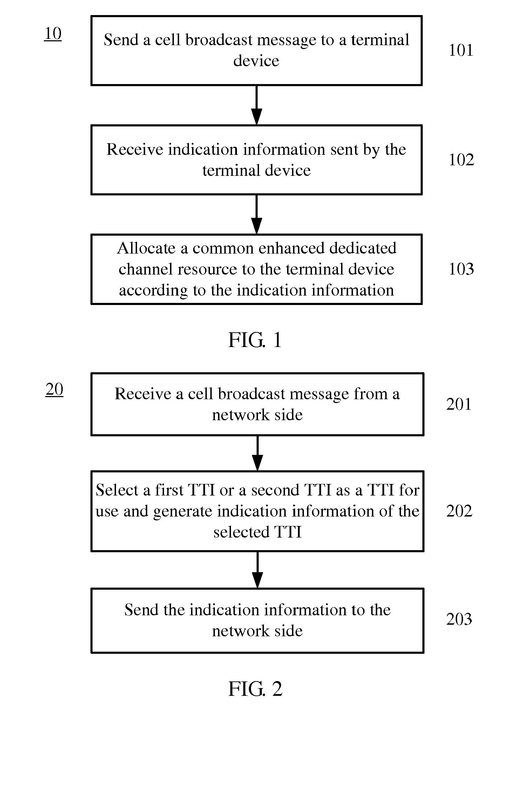

FIG. 1 is a schematic flowchart of a method for allocating channel resource according to an embodiment of the present invention. The method 10 shown in FIG. 1 is executed mainly on the network side, for example, by a base station (such as a Node B).

In step 101 of the method 10, a cell broadcast message is sent to a terminal device (such as a UE), where the cell broadcast message includes description information of a first parameter configuration and description information of a second parameter configuration that correspond to common enhanced dedicated channel Common-EDCH resources, where the first parameter configuration is specific to a first transmission time interval (TTI) and the second parameter configuration is specific to a second TTI which is different from the first TTI.

102. Receive indication information sent from the terminal device, where the indication information indicates that the terminal device selects the first TTI or the second TTI as a TTI for use.

103. Allocate a common enhanced dedicated channel resource to the terminal device according to the indication information.

In the embodiment of the present invention, multiple TTIs are configured for a cell and the parameter configuration information of the multiple TTIs is broadcast to the terminal device, so that the terminal device can select a proper TTI from the multiple TTIs and the network side can allocate a channel resource according to the selected TTI, thereby increasing the efficiency in allocating and utilizing system resources.

Corresponding operations are executed on the terminal side. FIG. 2 is a schematic flowchart of a method for allocating channel resource according to an embodiment of the present invention. The method 20 shown in FIG. 2 is executed by a terminal device (such as a UE) and includes the following:

201. Receive a cell broadcast message from a network side, where the cell broadcast message includes description information of a first parameter configuration and description information of a second parameter configuration that correspond to common enhanced dedicated channel resources, where the first parameter configuration is specific to a first transmission time interval (TTI) and the second parameter configuration is specific to a second TTI which is different from the first TTI.

202. Select the first TTI or the second TTI as a TTI for use and generate indication information of the selected TTI.

203. Send the indication information to the network side, so that the network side allocates a common enhanced dedicated channel resource according to the indication information.

In the embodiment of the present invention, multiple TTIs are configured for a cell and the parameter configuration information of the multiple TTIs is broadcast to the terminal device, so that the terminal device can select a proper TTI from the multiple TTIs and the network side can allocate a channel resource according to the selected TTI, thereby increasing the efficiency in allocating and utilizing system resources.

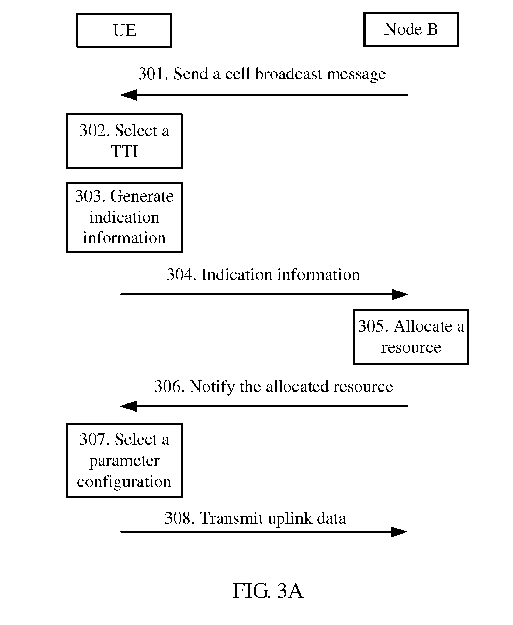

A process of channel resource allocation in a communication system in an embodiment of present invention will be described in detail in the following. FIG. 3A is a schematic flowchart of a process of channel resource allocation according to an embodiment of the present invention.

In step S31 shown in FIG. 3A, a Node B sends a cell broadcast message to a UE. The cell broadcast message includes description information of a first parameter configuration and description information of a second parameter configuration that correspond to Common-EDCH resources, where the first parameter configuration is specific to a first TTI (such as 2 ms or 10 ms) and the second parameter configuration is specific to a second TTI (such as 10 ms or 2 ms) which is different from the first TTI. In other words, in addition to an existing TTI, the broadcast message in the embodiment of the present invention may include a description of an additional parameter configuration specific to another TTI length.

In step 302, after receiving the broadcast message, the UE obtains information of the two TTIs that can be supported by the cell. Therefore, the UE selects the first TTI or the second TTI as a TTI for use according to its own requirement.

In step 303, the UE generates indication information of the selected TTI and sends the indication information to the Node B in step 304. The indication information may be sent through a dedicated indication message or carried by other messages. For example, the UE notifies the Node B of the selected TTI length by selecting different signatures (signature) at the random access stage, or the UE notifies the Node B of the selected TTI length by using different preamble scramble codes (preamble scramble code) at the random access stage.

In step 305, after receiving the indication information of the TTI selected by the UE, the Node B is triggered to allocate a Common-EDCH resource. In a scenario where a 2 ms TTI and a 10 ms TTI share 32 sets of common E-DCH resources, the Node B may allocate a common E-DCH resource according to a resource allocation manner similar to that defined in the existing protocol.

In step 306, the Node B notifies the UE of the allocated Common-EDCH resource.

In step 307, after receiving the notification of the Node B, the UE selects the corresponding parameter configuration (the first parameter configuration or the second parameter configuration) according to the selected TTI.

In step 308, the UE transmits uplink data by using the selected parameter configuration.

In the embodiment of the present invention, multiple TTIs are configured for a cell and the parameter configuration information of the multiple TTIs is broadcast to the terminal device, so that the terminal device can select a proper TTI from the multiple TTIs and a network side can allocate a channel resource according to the selected TTI, thereby increasing the efficiency in allocating and utilizing system resources.

In the example shown in FIG. 3A, in a scenario where a 2 ms TTI and a 10 ms TTI share 32 sets of common E-DCH resources, the Node B may not consider the TTI length selected by the UE when allocating a common E-DCH resource. In an embodiment of the present invention, the TTI selected by the UE may be considered when a common E-DCH resource is allocated.

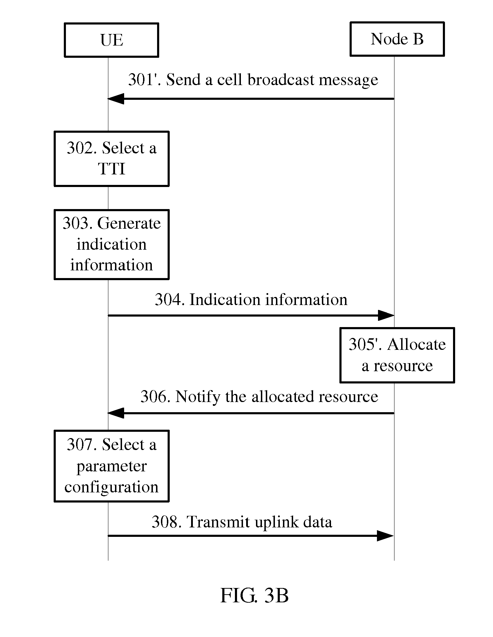

FIG. 3B is a schematic flowchart of a process of channel resource allocation according to an embodiment of the present invention. In FIG. 3B, processes that are the same as or similar to those in FIG. 3A are identified by same or similar marks and the details thereof are appropriately omitted.

Step 301' is similar to step 301 in FIG. 3A, where a Node B sends a cell broadcast message to a UE. The difference is that the cell broadcast message sent in step 301' includes not only the description information of parameter configurations of two TTIs (such as a 2 ms TTI length and a 10 ms TTI length) but also indexes of common E-DCH resources respectively used by the 2 ms TTI and 10 ms TTI, that is, the existing 32 sets of common E-DCH resources are grouped in two lists (resource subsets) of the 2 ms TTI and 10 ms TTI.

Steps 302-304 are the same as steps 302-304 in FIG. 3A. In step 302, the UE obtains information of the two TTIs that can be supported by the cell after receiving the broadcast message. The UE selects the first TTI or the second TTI as a TTI for use according to its own need.

In step 303, the UE generates indication information of the selected TTI and sends the indication information to the Node B in step 304. The indication information may be sent through a dedicated indication message or carried by other messages. For example, the UE notifies the Node B of the selected TTI length by selecting different signatures (signature) at the random access stage, or the UE notifies the Node B of the selected TTI length by using different preamble scramble codes (preamble scramble code) at the random access stage.

In step 305', after receiving the indication information of the TTI selected by the UE, the Node B is triggered to allocate a Common-EDCH resource. In this case, when allocating a resource, the Node B considers the TTI selected by the UE.

For example, the indexes of the 32 sets of common E-DCH resources are 0 to 31, and in the broadcast message, 0 to 15 are allocated to the 2 ms TTI and 16 to 31 are allocated to the 10 ms TTI. In this case, if the indication message of the UE indicates that the 2 ms TTI length is selected, the Node B selects a common E-DCH resource to be allocated to the UE from the resource subset with indexes of 0-15. If the indication message of the UE indicates that the 10 ms TTI length is selected, the Node B selects a common E-DCH resource to be allocated to the UE from the resource subset with indexes of 16-31.

Steps 306-308 are the same as steps 306-308 in FIG. 3A. In step 306, the Node B notifies the UE of the allocated Common-EDCH resource.

In step 307, after receiving the notification of the Node B, the UE selects the corresponding parameter configuration (the first parameter configuration or the second parameter configuration) according to the selected TTI.

In step 308, the UE transmits uplink data by using the selected parameter configuration.

In the embodiment of the present invention, multiple TTIs are configured for a cell and the parameter configuration information of the multiple TTIs is broadcast to the terminal device, so that the terminal device can select a proper TTI from the multiple TTIs and a network side can allocate a channel resource according to the selected TTI, thereby increasing the efficiency in allocating and utilizing system resources.

When the UE notifies the Node B of the selected TTI, the selection may be denied (in step 305 or 305'). For example, because the number of UEs using the 2 ms TTI length is larger than the number of UEs using the 10 ms TTI length while the number of resources available for allocation (the size of corresponding resource subsets) may be the same for the two TTI lengths, resources in the resource subset corresponding to the 2 ms TTI length may all be occupied, resulting in that a UE selecting the 2 ms TTI is denied. In this case, in the embodiment of the present invention, the number of denials to the UE can be recorded and the sizes of the resource subsets can be dynamically adjusted.

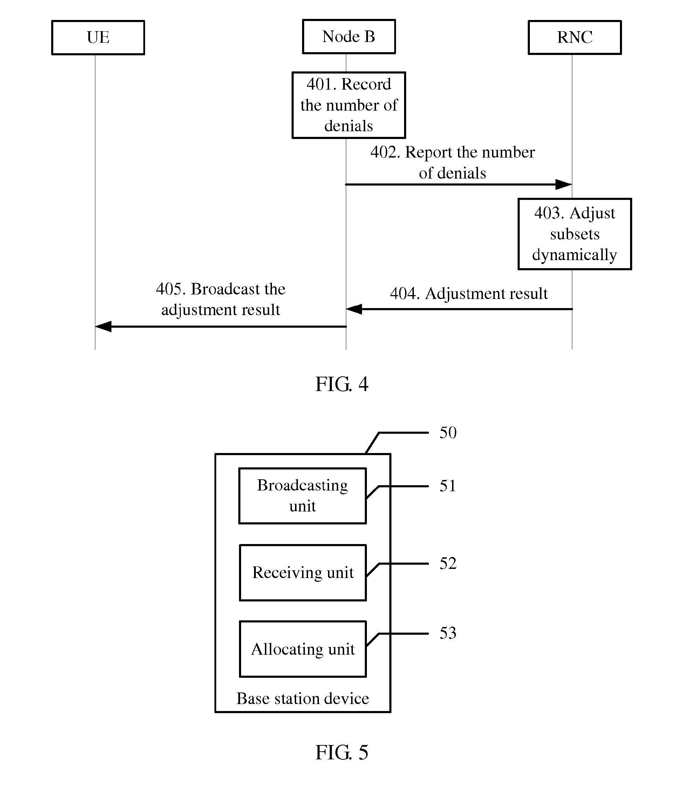

FIG. 4 is a schematic flowchart of a process of dynamic adjustment of resource subsets according to an embodiment of the present invention.

As shown in FIG. 4, in step 401, a Node B records the number of denials to a UE. For example, the Node B records the number of denials to the UE selecting a 2 ms TTI and the number of denials to the UE selecting a 10 ms TTI.

In step 402, the Node B reports the recorded number to an RNC (radio network controller, Radio Network Controller). For example, the Node B reports the number to the RNC over an Iub interface. According to an embodiment of the present invention, the Node B may report the number to the RNC through a Denied E-DCH RACH Resources message under E-DCH RACH Report.

In step 403, the RNC adjusts the numbers of resources in the resource subsets (lists) of the 2 ms TTI and 10 ms TTI according to the number of denials reported by the Node B. For example, it is assumed that 0 to 15 are allocated to the 2 ms TTI and that 16 to 31 are allocated to the 10 ms TTI previously. After the Node B reports the numbers of the Denied E-DCH RACH Resources of the 2 ms TTI and 10 ms TTI, if the number of denials of the 2 ms TTI is larger, the RNC can increase common E-DCH resources corresponding to the 2 ms TTI, for example, allocate resources indexed 0-20 to the 2 ms TTI and resources indexed 21-31 to the 10 ms TTI. Thereby, common E-DCH resources in the resource subsets are adjusted dynamically.

In step 404, the RNC notifies the Node B of the adjustment result. The RNC may notify the Node B of the adjustment result through a dedicated message or other proper messages.

In step 405, the Node B notifies the UE of the new resource subset (list) information through a broadcast message. Thereby, the UE obtains the adjusted resource subset information by reading the broadcast message.

Thereby, in the embodiment of the present invention, the allocation manner of resources corresponding to two TTI lengths can be adjusted dynamically according to the running status of the network. This further increases the utilization efficiency of resources.

FIG. 5 is a schematic block diagram of a base station device according to an embodiment of the present invention. As shown in FIG. 5, the base station device 50 according to the embodiment of the present invention includes a broadcasting unit 51, a receiving unit 52, and an allocating unit 53.

The broadcasting unit 51 is configured to send a cell broadcast message to a terminal device, where the cell broadcast message includes description information of a first parameter configuration and description information of a second parameter configuration that correspond to common enhanced dedicated channel resources, where the first parameter configuration is specific to a first transmission time interval (TTI) and the second parameter configuration is specific to a second TTI which is different from the first TTI.

The receiving unit 52 is configured to receive indication information sent from the terminal device, where the indication information indicates that the terminal device selects the first TTI or the second TTI as a TTI for use.

The allocating unit 53 is configured to allocate a common enhanced dedicated channel resource to the terminal device according to the indication information.

In the embodiment of the present invention, multiple TTIs are configured for a cell and the parameter configuration information of the multiple TTIs is broadcast to the terminal device, so that the terminal device can select a proper TTI from the multiple TTIs and a network side can allocate a channel resource according to the selected TTI, thereby increasing the efficiency in allocating and utilizing system resources.

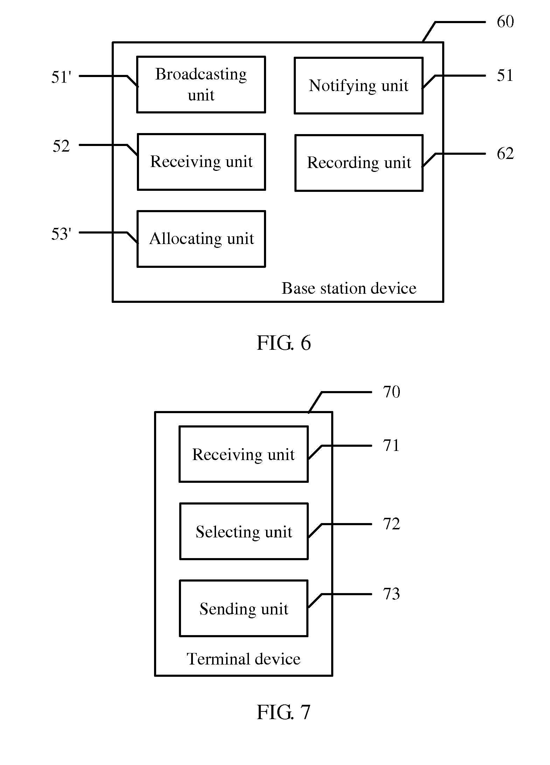

FIG. 6 is a schematic block diagram of a base station device according to an embodiment of the present invention. In FIG. 5, parts that are the same as or similar to those in FIG. 5 are identified by same or similar marks and the details thereof are appropriately omitted.

The base station device 60 in FIG. 6 includes a broadcasting unit 51', a receiving unit 52, and an allocating unit 53'. A cell broadcast message sent from the broadcasting unit 51' includes description information of a first parameter configuration and description information of a second parameter configuration that correspond to common enhanced dedicated channel resources, which are grouped into a first resource subset specific to a first TTI and a second resource subset specific to a second TTI.

In addition, the allocating unit 53' allocates a common enhanced dedicated channel resource in the first resource subset to the terminal device when the indication information received by the receiving unit 52 indicates that the selected TTI is the first TTI; and allocates a common enhanced dedicated channel resource in the second resource subset to the terminal device when the indication information received by the receiving unit 52 indicates that the selected TTI is the second TTI.

As shown in FIG. 6, the base station device 60 further includes a notifying unit 61 and/or a recording unit 62.

The notifying unit 61 notifies the terminal device of the allocated common enhanced dedicated channel resource, so that the terminal device selects the first parameter configuration or the second parameter configuration according to the selected TTI.

The recording unit 62 is configured to record the number of denials to the terminal device and send the recorded number to a radio network controller, so that the radio network controller adjusts the common enhanced dedicated channel resources in the first resource subset and the second resource subset according to the number.

The base station device in FIG. 5 and FIG. 6 can execute all steps relating to the Node B in the foregoing method for allocating common enhanced dedicated channel resources, and to avoid repetition, the details will not be described herein again.

FIG. 7 is a schematic block diagram of a terminal device according to an embodiment of the present invention. The terminal device 70 shown in FIG. 7 includes a receiving unit 71, a selecting unit 72, and a sending unit 73.

The receiving unit 71 is configured to receive a cell broadcast message from a network side, where the cell broadcast message includes description information of a first parameter configuration and description information of a second parameter configuration that correspond to common enhanced dedicated channel resources, where the first parameter configuration is specific to a first transmission time interval (TTI) and the second parameter configuration is specific to a second TTI which is different from the first TTI.

The selecting unit 72 is configured to select the first TTI or the second TTI as a TTI for use and generate indication information of the selected TTI.

The sending unit 73 is configured to send the indication information to the network side, so that the network side allocates a common enhanced dedicated channel resource according to the indication information.

In the embodiment of the present invention, multiple TTIs are configured for a cell and the parameter configuration information of the multiple TTIs is broadcast to the terminal device, so that the terminal device can select a proper TTI from the multiple TTIs and the network side can allocate a channel resource according to the selected TTI, thereby increasing the efficiency in allocating and utilizing system resources.

The terminal device 70 in FIG. 7 can execute all steps relating to the UE in the foregoing method for allocating common enhanced dedicated channel resources, and to avoid repetition, the details will not be described herein again.

For example, the receiving unit 71 is further configured to receive a notification of the allocated common enhanced dedicated channel resource. The selecting unit 72 is further configured to select the first parameter configuration or the second parameter configuration according to the selected TTI.

According to another embodiment of the present invention, the receiving unit 71 receives a cell broadcast message, where, in the cell broadcast message, common enhanced dedicated channel resources are grouped into a first resource subset specific to the first TTI and a second resource subset specific to the second TTI.

The foregoing describes embodiments where a UE selects a TTI but the present invention is not limited thereto. The selection of a TTI may also be determined by the network side.

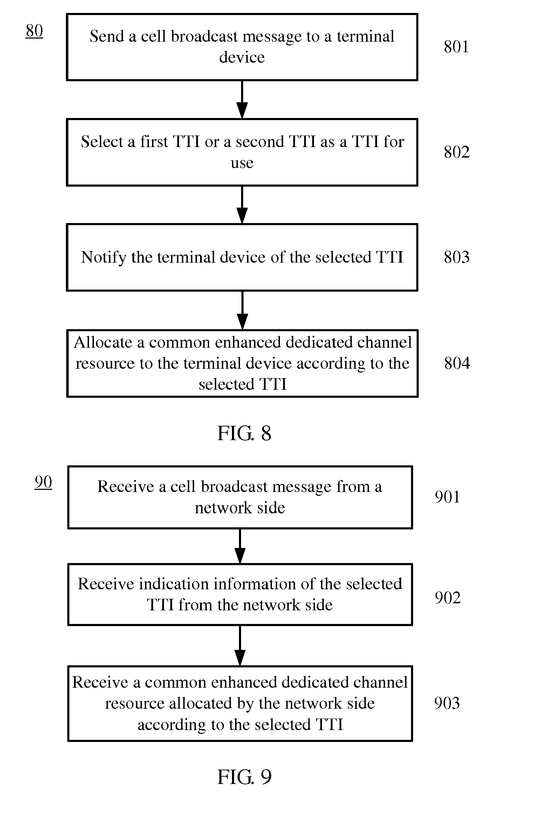

FIG. 8 is a schematic flowchart of a method for allocating channel resource according to an embodiment of the present invention. The method 10 shown in FIG. 8 is executed mainly on the network side, for example, by a base station (such as a Node B).

As shown in FIG. 8, step 801 of the method 80 is similar to step 101 of the method 10. A cell broadcast message is sent to a terminal device, where the cell broadcast message includes description information of a first parameter configuration and description information of a second parameter configuration that correspond to common enhanced dedicated channel resources, where the first parameter configuration is specific to a first transmission time interval (TTI) and the second parameter configuration is specific to a second TTI which is different from the first TTI.

In step 802, the Node B selects the first TTI or the second TTI as a TTI for use. According to information in the cell, the Node B may select the TTI to be used by the UE. For example, the Node B may determine the selected TTI length according to preamble (preamble) power of uplink access of the UE.

In step 803, the Node B notifies the terminal device of the selected TTI, and in step 804, the Node B allocates a common enhanced dedicated channel resource to the terminal device according to the selected TTI.

In the embodiment of the present invention, multiple TTIs are configured for a cell and the network side broadcasts the parameter configuration information of the multiple TTIs to the terminal device and then selects a proper TTI from the multiple TTIs and allocates a channel resource according to the selected TTI, thereby increasing the efficiency in allocating and utilizing system resources.

Corresponding operations are executed on the terminal side. FIG. 9 illustrates a method for allocating channel resource according to an embodiment of the present invention. The method 90 shown in FIG. 9 is executed by a terminal device (such as a UE).

901. Receive a cell broadcast message from a network side, where the cell broadcast message includes description information of a first parameter configuration and description information of a second parameter configuration that correspond to common enhanced dedicated channel resources, where the first parameter configuration is specific to a first transmission time interval (TTI) and the second parameter configuration is specific to a second TTI which is different from the first TTI.

902. Receive indication information from the network side, where the indication information indicates that the network side device selects the first TTI or the second TTI as a TTI for use.

903. Receive a common enhanced dedicated channel resource that is allocated by the network side according to the selected TTI.

Thereby, in the embodiment of the present invention, multiple TTIs are configured for a cell and the network side broadcasts the parameter configuration information of the multiple TTIs to the terminal device and then selects a proper TTI from the multiple TTIs and allocates a channel resource according to the selected TTI, thereby increasing the efficiency in allocating and utilizing system resources.

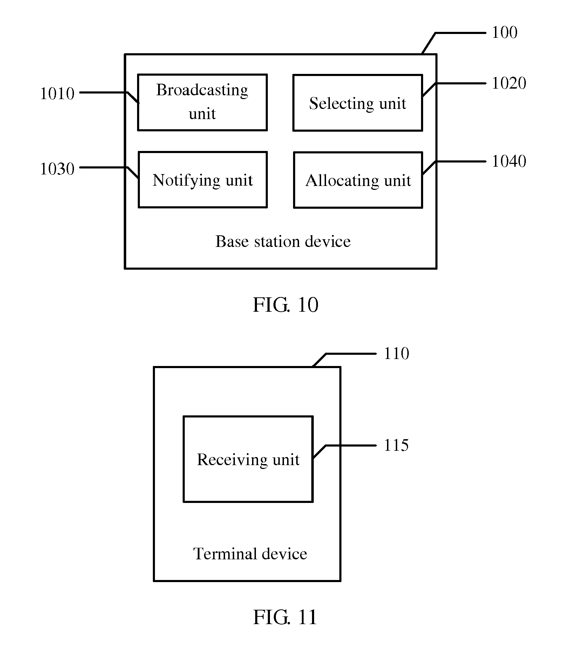

FIG. 10 is a schematic block diagram of a base station device according to an embodiment of the present invention. The base station device 100 shown in FIG. 10 includes:
a broadcasting unit 1010, configured to send a cell broadcast message to a terminal device, where the cell broadcast message includes description information of a first parameter configuration and description information of a second parameter configuration that correspond to common enhanced dedicated channel resources, where the first parameter configuration is specific to a first transmission time interval (TTI) and the second parameter configuration is specific to a second TTI which is different from the first TTI;
a selecting unit 1020, configured to select the first TTI or the second TTI as a TTI for use;
a notifying unit 1030, configured to notify the terminal device of the selected TTI; and
an allocating unit 1040, configured to allocate a common enhanced dedicated channel resource to the terminal device according to the selected TTI.

Thereby, in the embodiment of the present invention, multiple TTIs are configured for a cell and the network side broadcasts the parameter configuration information of the multiple TTIs to the terminal device and then selects a proper TTI from the multiple TTIs and allocates a channel resource according to the selected TTI, thereby increasing the efficiency in allocating and utilizing system resources.

FIG. 11 is a schematic block diagram of a terminal device according to an embodiment of the present invention. The terminal device 110 shown in FIG. 11 includes a receiving unit 115. The receiving unit 115 is configured to receive a cell broadcast message from a network side, where the cell broadcast message includes description information of a first parameter configuration and description information of a second parameter configuration that correspond to common enhanced dedicated channel resources, where the first parameter configuration is specific to a first transmission time interval (TTI) and the second parameter configuration is specific to a second TTI which is different from the first TTI.

The receiving unit 115 is further configured to receive indication information from the network side, where the indication information indicates that the network side device selects the first TTI or the second TTI as a TTI for use.

The receiving unit 115 is further configured to receive a common enhanced dedicated channel resource that is allocated by the network side according to the selected TTI.

Thereby, in the embodiment of the present invention, multiple TTIs are configured for a cell and the network side broadcasts the parameter configuration information of the multiple TTIs to the terminal device and then selects a proper TTI from the multiple TTIs and allocates a channel resource according to the selected TTI, thereby increasing the efficiency in allocating and utilizing system resources.

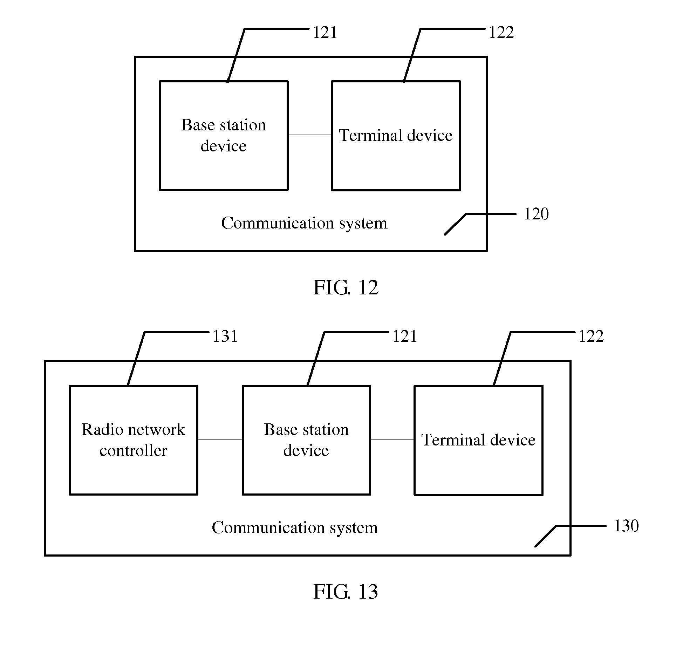

FIG. 12 is a schematic block diagram of a communication system according to an embodiment of the present invention. The communication system 120 shown in FIG. 12 includes a base station device 121 and a terminal device 122.

The base station device 121 may be the foregoing base station device 50, 60, or 100. The terminal device 122 may be the foregoing terminal device 70 or 110. Therefore, detailed descriptions thereof are omitted.

FIG. 13 is a schematic block diagram of a communication system according to another embodiment of the present invention. In the communication system 130 shown in FIG. 13, parts that are the same as or similar to those in FIG. 12 are identified with the same or similar marks.

As shown in FIG. 13, in addition to the base station device 121 and the terminal device 122, the communication system 130 further includes a radio network controller (RNC) 131. In a scenario where different resource subsets (such as a first resource subset and a second resource subset) are adopted for different TTIs, the radio network controller 131 is configured to receive the number of denials to the terminal device 122 recorded by the base station device 121 and adjust common enhanced dedicated channel resources in the first resource subset and the second resource subset according to the number.

A person of ordinary skill in the art may be aware that, in combination with the examples described in the embodiments disclosed in this specification, units and algorithm steps may be implemented by electronic hardware, computer software, or a combination thereof. In order to clearly describe the interchangeability between the hardware and the software, the foregoing has generally described compositions and steps of each embodiment according to functions. Whether the functions are performed by hardware or software depends on particular applications and design constraint conditions of the technical solutions. A person skilled in the art may implement the described functions by using different methods for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, reference may be made to the corresponding process in the foregoing method embodiments, and details will not be described herein again.

In the several embodiments provided in the present application, it should be understood that the disclosed system, apparatus, and method may be implemented in other manners. For example, the described apparatus embodiment is merely exemplary. For example, the unit division is merely logical function division and may be other divisions in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical or other forms.

The units described as separate parts may or may not be physically separate, and parts displayed as units may or may not be physical units, that is, may be located in one position, or may be distributed on a plurality of network elements. A part or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in the form of hardware, or may be implemented in the form of a software functional unit.

When the integrated unit are implemented in the form of a software functional unit and sold or used as an independent product, the integrated unit may be stored in a computer-readable storage medium. Based on such an understanding, the technical solutions of the present invention essentially, or the part contributing to the prior art, or all or a part of the technical solutions may be implemented in the form of a software product. The computer software product is stored in a storage medium, and includes several instructions for instructing a computer device (which may be a personal computer, a server, or a network device or the like) to perform all or a part of the steps of the methods described in the embodiments of the present invention. The foregoing storage medium includes: any medium that can store a program code, such as a USB flash disk, a removable hard disk, a read-only memory (ROM, Read-Only Memory), a random access memory (RAM, Random Access Memory), a magnetic disk, or an optical disk.

The foregoing descriptions are merely specific embodiments of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A method for allocating channel resource, **characterized in** comprising:
sending a cell broadcast message to a terminal device, wherein the cell broadcast message comprises description information of a first parameter configuration and description information of a second parameter configuration that correspond to common enhanced dedicated channel resources, wherein the first parameter configuration is specific to a first transmission time interval (TTI) and the second parameter configuration is specific to a second transmission time interval (TTI) which is different from the first TTI;
receiving indication information sent from the terminal device, wherein the indication information indicates that the terminal device selects the first TTI or the second TTI as a TTI for use; and
allocating a common enhanced dedicated channel resource to the terminal device according to the indication information.

2. The method according to claim 1, **characterized in that** the sending the cell broadcast message to the terminal device comprises:
sending the cell broadcast message to the terminal device, wherein, in the cell broadcast message, the common enhanced dedicated channel resources are grouped into a first resource subset specific to the first TTI and a second resource subset specific to the second TTI.

3. The method according to claim 2, **characterized in that** the allocating the common enhanced dedicated channel resource to the terminal device according to the indication information comprises:
allocating a common enhanced dedicated channel resource in the first resource subset to the terminal device when the indication information indicates that the selected TTI is the first TTI; and
allocating a common enhanced dedicated channel resource in the second resource subset to the terminal device when the indication information indicates that the selected TTI is the second TTI.

4. The method according to claim 2, **characterized in** further comprising:
recording the number of denials to the terminal device; and
sending the recorded number to a radio network controller, so that the radio network controller adjusts the common enhanced dedicated channel resources in the first resource subset and the second resource subset according to the number.

5. A method for allocating channel resource, **characterized in** comprising:
receiving a cell broadcast message from a network side, wherein the cell broadcast message comprises description information of a first parameter configuration and description information of a second parameter configuration that correspond to common enhanced dedicated channel resources, wherein the first parameter configuration is specific to a first transmission time interval (TTI) and the second parameter configuration is specific to a second TTI which is different from the first TTI;
selecting the first TTI or the second TTI as a TTI for use and generating indication information of the selected TTI; and
sending the indication information to the network side, so that the network side allocates a common enhanced dedicated channel resource according to the indication information.

6. The method according to claim 5, **characterized in that** the receiving the cell broadcast message from the network side comprises:
receiving the cell broadcast message, wherein, in the cell broadcast message, the common enhanced dedicated channel resources are grouped into a first resource subset specific to the first TTI and a second resource subset specific to the second TTI.

7. A method for allocating channel resource, **characterized in** comprising:
sending a cell broadcast message to a terminal device, wherein the cell broadcast message comprises description information of a first parameter configuration and description information of a second parameter configuration that correspond to common enhanced dedicated channel resources, wherein the first parameter configuration is specific to a first transmission time interval (TTI) and the second parameter configuration is specific to a second TTI which is different from the first TTI;
selecting the first TTI or the second TTI as a TTI for use;
notifying the terminal device of the selected TTI; and
allocating a common enhanced dedicated channel resource to the terminal device according to the selected TTI.

8. A method for allocating channel resource, **characterized in** comprising:
receiving a cell broadcast message from a network side, wherein the cell broadcast message comprises description information of a first parameter configuration and description information of a second parameter configuration that correspond to common enhanced dedicated channel resources, wherein the first parameter configuration is specific to a first transmission time interval (TTI) and the second parameter configuration is specific to a second TTI which is different from the first TTI;
receiving indication information from the network side, wherein the indication information indicates that the network side device selects the first TTI or the second TTI as a TTI for use; and
receiving a common enhanced dedicated channel resource that is allocated by the network side according to the selected TTI.

9. A base station device, **characterized in** comprising:
a broadcasting unit, configured to send a cell broadcast message to a terminal device, wherein
the cell broadcast message comprises description information of a first parameter configuration and description information of a second parameter configuration that correspond to common enhanced dedicated channel resources, wherein the first parameter configuration is specific to a first transmission time interval (TTI) and the second parameter configuration is specific to a second TTI which is different from the first TTI;
a receiving unit, configured to receive indication information sent from the terminal device, wherein the indication information indicates that the terminal device selects the first TTI or the second TTI as a TTI for use; and
an allocating unit, configured to allocate a common enhanced dedicated channel resource to the terminal device according to the indication information.

10. The base station device according to claim 9, **characterized in that** the broadcasting unit sends the cell broadcast message to the terminal device, wherein, in the cell broadcast message, the common enhanced dedicated channel resources are grouped into a first resource subset specific to the first TTI and a second resource subset specific to the second TTI.

11. The base station device according to claim 10, **characterized in that**, the allocating unit allocates a common enhanced dedicated channel resource in the first resource subset to the terminal device when the indication information indicates that the selected TTI is the first TTI; and allocates a common enhanced dedicated channel resource in the second resource subset to the terminal device when the indication information indicates that the selected TTI is the second TTI.

12. The base station device according to claim 10, **characterized in** further comprising:
a recording unit, configured to record the number of denials to the terminal device and send the recorded number to a radio network controller, so that the radio network controller adjusts the common enhanced dedicated channel resources in the first resource subset and the second resource subset according to the number.

13. A base station device, **characterized in** comprising:
a broadcasting unit, configured to send a cell broadcast message to a terminal device, wherein
the cell broadcast message comprises description information of a first parameter configuration and description information of a second parameter configuration that correspond to common enhanced dedicated channel resources, wherein the first parameter configuration is specific to a first transmission time interval (TTI) and the second parameter configuration is specific to a second TTI which is different from the first TTI;
a selecting unit, configured to select the first TTI or the second TTI as a TTI for use;
a notifying unit, configured to notify the terminal device of the selected TTI; and
an allocating unit, configured to allocate a common enhanced dedicated channel resource to the terminal device according to the selected TTI.

14. A terminal device, **characterized in** comprising:
a receiving unit, configured to receive a cell broadcast message from a network side, wherein
the cell broadcast message comprises description information of a first parameter configuration and description information of a second parameter configuration that correspond to common enhanced dedicated channel resources, wherein the first parameter configuration is specific to a first transmission time interval (TTI) and the second parameter configuration is specific to a second TTI which is different from the first TTI;
a selecting unit, configured to select the first TTI or the second TTI as a TTI for use and generate indication information of the selected TTI; and
a sending unit, configured to send the indication information to the network side, so that the network side allocates a common enhanced dedicated channel resource according to the indication information.

15. The terminal device according to claim 14, **characterized in that**:
the receiving unit is further configured to receive a notification of the allocated common enhanced dedicated channel resource; and
the selecting unit is further configured to select the first parameter configuration or the second parameter configuration according to the selected TTI.

16. The terminal device according to claim 14, **characterized in that** the receiving unit receives the cell broadcast message, wherein, in the cell broadcast message, the common enhanced dedicated channel resources are grouped into a first resource subset specific to the first TTI and a second resource subset specific to the second TTI.

17. A terminal device, **characterized in** comprising:
a receiving unit, configured to receive a cell broadcast message from a network side, wherein the cell broadcast message comprises description information of a first parameter configuration and description information of a second parameter configuration that correspond to common enhanced dedicated channel resources, wherein the first parameter configuration is specific to a first transmission time interval (TTI) and the second parameter configuration is specific to a second TTI which is different from the first TTI; wherein
the receiving unit is further configured to receive indication information from the network side, wherein the indication information indicates that the network side device selects the first TTI or the second TTI as a TTI for use; and
the receiving unit is further configured to receive a common enhanced dedicated channel resource that is allocated by the network side according to the selected TTI.

18. A communication system, **characterized in** comprising:
the base station device according to any one of claims 9-13; and
the terminal device according to any one of claims 14-17.

19. The communication system according to claim 18, **characterized in** further comprising:
a radio network controller, configured to receive the number of denials to the terminal device recorded by the base station device and adjust the common enhanced dedicated channel resources in the first resource subset and the second resource subset according to the number.
